# EUROPEAN PATENT SPECIFICATION

(11) **EP 3 885 515 B1**
(45) Date of publication and mention of the grant of the patent: **24.05.2023**
(21) Application number: 21165111.2
(22) Date of filing: 26.03.2021
(51) Int. Cl.: E05B 47/06, E05B 47/00

(54) **LOCK CYLINDER WITH ELECTRIC MOTOR**
SCHLIESSZYLINDER MIT ELEKTROMOTOR
SERRURE À CYLINDRE AVEC MOTEUR ÉLECTRONIQUE

(30) Priority: 27.03.2020 CN 202020428519 U
(43) Date of publication of application: 29.09.2021
(73) Proprietor: Wanjia Group Co., LTD., Jinhua Zhejiang (CN)
(72) Inventor: Cai, Haishan, Jinhua, Zhejiang (CN); Cheng, Xinmin, Jinhua, Zhejiang (CN); Cheng, Junnan, Jinhua, Zhejiang (CN)
(74) Representative: Cabinet Chaillot

(56) References cited:
- NL-C2- 1 039 122
- US-A1- 2015 040 695
- US-A1- 2016 145 900

## Description

### FIELD

The present invention relates to the technical field of automatic locks, in particular to a lock plug with an electric motor.

### BACKGROUND

A lock plug insertion hole of a security door at present is generally about 25 mm, and an insertion slot of a lower portion of a lock plug is generally about 15 mm. However, for an electric motor of a common automatic unlocking lock plug with a split electric motor, for example, Chinese utility model application No. 2019200945574, the electric motor is additionally arranged outside the lock plug and connected to a protruding lock plug core, and consequently, the electric motor lock plug cannot be inserted into a door for being mounted in the case of the hole of this size.

A current treatment method is to enlarge the lock plug insertion hole and the insertion slot of a door panel so as to enable the electric motor lock plug to enter the lock plug hole. However, such operation modes require secondary processing on the door, thereby increasing the mounting difficulty of the electric motor lock plug.

US 2015/040695 A1 discloses a lock assembly comprising: a cylinder lock comprising a rotatable member for actuating an external locking element; and a reduction gear disposed inside said cylinder lock, said reduction gear mechanically linked to said rotatable member and operable to rotate said rotatable member, said reduction gear comprising an interface member for connection to an actuator for movement of said reduction gear, and wherein said reduction gear comprises an inner gear and an outer gear, said outer gear arranged for rotation about a rotation axis.

US 2016/145900 A1 discloses a cylinder lock comprising: a cylinder lock body; a cam; an actuator and a manual element for operating said cam; and a clutch contained in said cylinder lock body that is selectively engaged with said cam and with either of said actuator and said manual element.

NL 1 039 122 C2 relates to a self-learning electronic and wireless functioning cylinder lock assembly, and more particularly to a lock assembly having two wireless manageable gates (RFID and HF) and two electronically managable (USB and Touch) capabilities.

### SUMMARY

A technical solution of the present invention provides a lock plug with an electric motor. The lock plug with the electric motor may be mounted without extra operation on a door panel. The technical solution is as follows:

The present invention provides a lock plug with an electric motor as defined in claim 1. The lock plug according to the present invention includes a lock plug body and the electric motor, wherein the electric motor is mounted at an end of the lock plug body, the lock plug body includes a lock plug core and a lock plug case, the electric motor is fixedly connected to the lock plug core, and an electric motor conductive contact sleeve insulated from the electric motor is arranged on a surface of an electric motor reducer; a position, corresponding to an electric motor output shaft, of the centre of the lock plug core is provided with a semicircular hole groove consistent with the electric motor output shaft ins shape and size, the lock plug core is provided with a set screw hole, and a position, corresponding to the set screw hole, of the electric motor output shaft is provided with a set screw groove; and the electric motor and an electric motor sleeve are positioned through a jump ring, and an overall dimension of the electric motor is smaller than that of a lock plug hole groove of a door.

Through mounting of the electric motor at the end of the lock plug, when an overall dimension of a used electric motor is smaller than that of the lock plug hole groove of the door, reaming operation on the door may be avoided. Instead, the lock plug and the electric motor connected to the lock plug may be directly inserted into a preset door hole, and are inserted, through the preset door hole, into a lock body lock plug hole for fixation, thus finally avoiding secondary processing on the door panel and realizing mounting of the lock plug with the electric motor.

The electric motor lock plug may further include an electric motor fixation part. One end of the electric motor fixation part is provided with an electric motor insertion hole groove which is consistent with the electric motor in shape, and the other end is provided with two mounting holes which are fixedly connected to a bottom of the lock plug case. The bottom of the lock plug case is provided with a screw fixation hole which is consistent with the mounting hole of the electric motor fixation part. An overall dimension of the electric motor and the electric motor fixation part is smaller than that of the lock plug hole groove of the door.

The electric motor is fixedly connected to the lock plug through the electric motor fixation part, so as to guarantee the stability of the lock plug with the electric motor. It is certain that this lock plug is merely applied to the single automatic electric motor lock plug with double-fast-function lock body.

According to the present invention, the lock plug with the electric motor further includes the electric motor sleeve and a cover plate sleeve frame. At least one limitation bulge is arranged outside the electric motor sleeve, a hole groove corresponding to an electric motor housing in shape is arranged inside the electric motor sleeve, an insertion hole adapting to the periphery of the electric motor sleeve is arranged on the cover plate sleeve frame, and a limitation groove corresponding to the limitation bulge is arranged on the cover plate sleeve frame.

The electric motor sleeve may be internally provided with a hole groove corresponding to the electric motor housing, and an electric motor with an elliptical-similarly electric motor housing is used, such that a position of the electric motor in the sleeve may be relatively fixed. In addition, a sleeve rack groove and a sleeve bulge are arranged, such that when the electric motor sleeve limitation bulge is inserted into the cover plate sleeve frame limitation groove, the electric motor sleeve and the cover plate sleeve frame may be relatively fixed in position, and an electric motor frame may be relatively fixed as well, thereby avoiding relative rotation of the electric motor frame when the electric motor rotates during automatic unlocking or locking, and causing the electric motor to more stably drive the lock plug core to rotate.

Particularly, a spring may be arranged between the interior of the electric motor sleeve and the electric motor housing.

Through arrangement of the spring in the electric motor sleeve, under normal circumstances, the electric motor sleeve limitation bulge is caused to be inserted into the cover plate sleeve frame limitation groove through tension of the spring in the electric motor sleeve, such that the electric motor housing may not rotate, and automatic unlocking or locking may be realized by controlling the electric motor to rotate. When the electric motor may not achieve unlocking, the groove and bulge may be relatively staggered by pressing the electric motor sleeve, thus destroying relative fixation between the electric motor sleeve and the cover plate sleeve frame. At this time, the whole electric motor may be rotated by manually rotating the electric motor sleeve to realize indoor manual unlocking.

According to the present invention, the electric motor conductive contact sleeve includes an inner layer insulation sleeve and an outer layer conductive layer. The inner layer insulation sleeve covers the surface of the electric motor reducer, the outer layer conductive layer is sleeved on the inner layer insulation sleeve, the outer layer conductive layer is electrically connected to one power supply connection point of the electric motor, the other power supply connection point of the electric motor is electrically connected to the electric motor housing, and a power supply elastic sheet is arranged at one side, close to the outer layer conductive layer, of the lock plug case, the power supply elastic sheet being in elastic contact with outer layer conductive layer.

Through arrangement of the power supply connection point electrically connecting the power supply elastic sheet and the electric motor housing, power supply of the electric motor may be directly or indirectly connected to the power supply elastic sheet and the electric motor housing, these two portions are in a relatively static state during whole unlocking action, thus avoiding the phenomenon that a power supply circuit is required to be driven to simultaneously rotate when the whole electric motor is rotated for manual unlocking, avoiding winding and twisting of the circuit, and improving operation stability of the lock plug with the electric motor.

### BRIEF DESCRIPTION OF THE DRAWINGS

The accompanying drawings herein are incorporated into the specification as integral part of the specification, show embodiments conforming to the present invention, and are used, together with the specification, to explain principles of the present invention. Among the drawings:
Fig. 1 is a schematic diagram of a solid structure of a lock plug with an electric motor;
Fig. 2 is schematic diagrams of solid structures of the electric motor, a sleeve and the lock plug;
Fig. 3 is a sectional view of Fig. 2 with the sleeve removed; and
Fig. 4 is a single automatic electric motor lock plug with a double-fast-function lock body.

Reference numerals: 1 Electric motor, 2 Lock plug, 3 Lock plug core, 4 Lock plug case, 5 Electric motor conductive contact sleeve, 6 Electric motor output shaft and lock plug semicircular hole groove, 7 Lock plug set screw hole, 8 Electric motor output shaft set screw groove, 9 Electric motor sleeve, 10 Cover plate sleeve frame, 11 Sleeve limitation bulge, 12 Sleeve rack limitation groove, 13 Inner layer insulation sleeve, 14 Outer layer conductive layer, 15 Power supply elastic sheet,, 17 Fixation part, and 18 Mounting hole.

### DETAILED DESCRIPTION OF THE EMBODIMENTS

The following disclosure provides many different embodiments or examples for realizing different structures of the present invention. In order to simplify the disclosure of the present invention, parts and settings of specific examples are described below. Apparently, they are merely examples, and are not intended to limit the present invention. In addition, the present description may repeat reference numerals and/or reference letters in different examples. This repetition is for the purpose of simplification and clarity, and itself does not indicate a relationship between various embodiments and/or settings discussed. In addition, the present description provides examples of various specific processes and materials, but a person of ordinary skill in the art may conceive applications of other processes and/or use of other materials.

A lock plug insertion hole of a security door at present is generally about 25 mm, and an insertion slot of a lower portion of a lock plug is generally about 15 mm. However, for an electric motor of a common automatic unlocking lock plug with a split electric motor, for example, Chinese utility model application No. 2019200945574, the electric motor is additionally arranged outside the lock plug and connected to a protruding lock plug core, and consequently, the electric motor lock plug cannot be inserted into a door for being mounted in the case of the hole of this size.

A current treatment method is to enlarge the lock plug insertion hole and the insertion slot of a door panel so as to enable the electric motor lock plug to enter the lock plug hole. However, such operation modes require secondary processing on the door, thereby increasing the mounting difficulty of the electric motor lock plug. [0024] A technical solution of the present invention provides a lock plug with an electric motor. The lock plug with the electric motor may be mounted without extra operation on the door panel. The technical solution is described below.

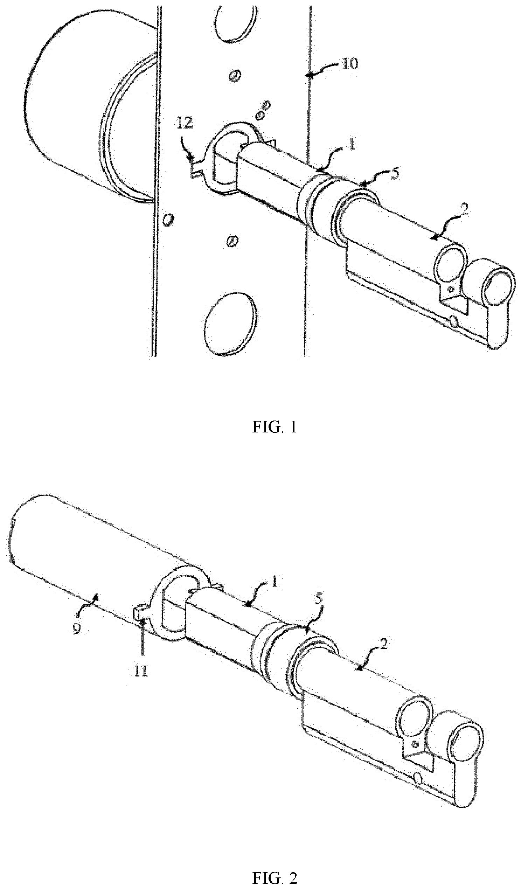

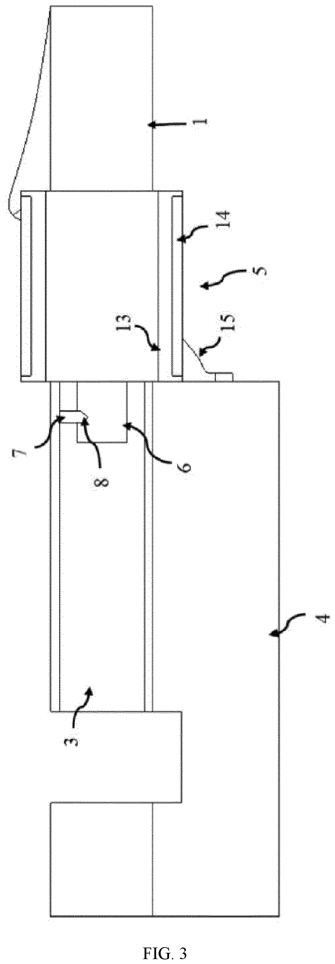

The present invention will be further described below in detail according to Fig. 1 to Fig. 4.

As shown in Fig 1, Fig. 2 and Fig. 3, the present invention provides the lock plug 2 with the electric motor 1. The lock plug 2 includes a lock plug body and the electric motor 1. The electric motor 1 is mounted at an end of the lock plug body, the lock plug body includes a lock plug core 3 and a lock plug case 4, the electric motor 1 is fixedly connected to the lock plug core 3, and an electric motor conductive contact sleeve 5 insulated from the electric motor 1 is arranged on a surface of an electric motor reducer. A position, corresponding to an electric motor output shaft 6, of the centre of the lock plug core 3 is provided with a semicircular hole groove consistent with the electric motor output shaft 6 in shape and size, the lock plug core 3 is provided with a set screw hole 7, and a position, corresponding to the set screw hole 7, of the electric motor output shaft 6 is provided with a set screw groove 8. The electric motor 1 and an electric motor sleeve 9 are positioned through a jump ring, and an overall dimension of the electric motor 1 is smaller than that of a lock plug hole groove of a door.

Through mounting of the electric motor 1 at the end of the lock plug 2, when an overall dimension of a used electric motor 1 is smaller than that of the lock plug hole groove of the door, reaming operation on the door may be avoided. Instead, the lock plug 2 and the electric motor 1 connected to the lock plug 2 may be directly inserted into a preset door hole, and are inserted, through the preset door hole, into a lock body lock plug hole for fixation, thus finally avoiding secondary processing on the door panel and realizing mounting of the lock plug 2 with the electric motor 1.

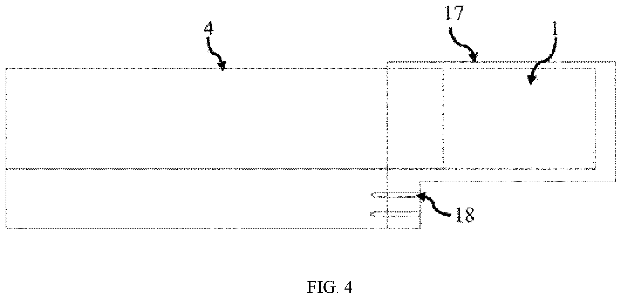

As shown in Fig. 4, the electric motor lock plug 2 further includes an electric motor fixation part 17. One end of the electric motor fixation part 17 is provided with an electric motor insertion hole groove which is consistent with the electric motor 1 in shape, and the other end is provided with two mounting holes 18 which are fixedly connected to a bottom of the lock plug case 4. The bottom of the lock plug case 4 is provided with a screw fixation hole which is consistent with the mounting hole 18 of the electric motor fixation part 17. An overall dimension of the electric motor 1 and the electric motor fixation part 17 is smaller than that of the lock plug hole groove of the door.

The electric motor 1 is fixedly connected to the lock plug 2 through the electric motor fixation part 17, so as to guarantee the stability of the lock plug 2 with the electric motor 1. It is certain that this lock plug 2 is merely applied to the single automatic electric motor lock plug with double-fast-function lock body.

Particularly, the lock plug 2 with the electric motor 1 further includes the electric motor sleeve 9 and a cover plate sleeve frame 10. At least one limitation bulge 11 is arranged outside the electric motor sleeve 9, a hole groove corresponding to an electric motor housing in shape is arranged inside the electric motor sleeve 9, an insertion hole adapting to the periphery of the electric motor sleeve 9 is arranged on the cover plate sleeve frame 10, and a limitation groove 12 corresponding to the limitation bulge 11 is arranged on the cover plate sleeve frame 10.

The electric motor sleeve 9 is internally provided with a hole groove corresponding to the electric motor housing, and an electric motor 1 with an elliptical-similarly electric motor housing is used, such that a position of the electric motor 1 in the sleeve may be relatively fixed. In addition, a sleeve rack groove 12 and a sleeve bulge 11 are arranged, such that when the electric motor sleeve limitation bulge 11 is inserted into the cover plate sleeve frame limitation groove 12, the electric motor sleeve 9 and the cover plate sleeve frame 10 may be relatively fixed in position, and an electric motor frame may be relatively fixed as well, thereby avoiding relative rotation of the electric motor frame when the electric motor 1 rotates during automatic unlocking or locking, and causing the electric motor 1 to more stably drive the lock plug core 3 to rotate.

Particularly, a spring is arranged between the interior of the electric motor sleeve 9 and the electric motor housing.

Through arrangement of the spring in the electric motor sleeve 9, under normal circumstances, the electric motor sleeve limitation bulge 11 is caused to be inserted into the cover plate sleeve frame limitation groove 12 through tension of the spring in the electric motor sleeve 9, such that the electric motor housing may not rotate, and automatic unlocking or locking may be realized by controlling the electric motor 1 to rotate. When the electric motor 1 may not achieve unlocking, the groove and bulge 11 may be relatively staggered by pressing the electric motor sleeve 9, thus destroying relative fixation between the electric motor sleeve 9 and the cover plate sleeve frame 10. At this time, the whole electric motor 1 may be rotated by manually rotating the electric motor sleeve 9 to realize indoor manual unlocking.

Particularly, the electric motor conductive contact sleeve 5 includes an inner layer insulation sleeve 13 and an outer layer conductive layer 14. The inner layer insulation sleeve 13 covers the surface of the electric motor reducer, the outer layer conductive layer 14 is sleeved on the inner layer insulation sleeve 13, the outer layer conductive layer 14 is electrically connected to one power supply connection point of the electric motor 1, the other power supply connection point of the electric motor 1 is electrically connected to the electric motor housing, and a power supply elastic sheet 15 is arranged at one side, close to the outer layer conductive layer 14, of the lock plug case 4, the power supply elastic sheet 15 being in elastic contact with outer layer conductive layer 14.

Through arrangement of the power supply connection point electrically connecting the power supply elastic sheet 15 and the electric motor housing, power supply of the electric motor 1 may be directly or indirectly connected to the power supply elastic sheet 15 and the electric motor housing, these two portions are in a relatively static state during whole unlocking action, thus avoiding the phenomenon that a power supply circuit is required to be driven to simultaneously rotate when the whole electric motor 1 is rotated for manual unlocking, avoiding winding and twisting of the circuit, and improving operation stability of the lock plug 2 with the electric motor 1.

Particularly, the electric motor housing is electrically connected to the electric motor output shaft 6 through an internally connected mechanical gear, the electric motor output shaft 6 and the lock plug core 3 are electrically interconnected as well, the lock plug core 3 and lock plug case 4 are further electrically interconnected, such that one power supply connection point connected to the electric motor housing is caused to be electrically interconnected through the mechanical gear, the electric motor output shaft 6, the lock plug core 3 and the lock plug case 4. Consequently, as long as the lock plug case 4 is connected, one connection point of the electric motor 1 may be electrified, and the other connection point may be used for directly electrifying the elastic sheet 15.

## Claims

1. A lock plug (2) with an electric motor (1) wherein the lock plug (2) comprises a lock plug body and the electric motor (1), wherein the electric motor (1) is mounted at an end of the lock plug body, the lock plug body comprises a lock plug core (3) and a lock plug case (4), the electric motor (1) is fixedly connected to the lock plug core (3), and an overall dimension of the electric motor (1) is smaller than that of a lock plug hole groove of a door,
**characterized in that**:
the centre, corresponding to an electric motor output shaft (6), of the lock plug core (3) is provided with a semicircular hole groove with the same shape and size as those of the electric motor output shaft (6), the lock plug core (3) is provided with a set screw hole (7), and a position, corresponding to the set screw hole (7), of the electric motor output shaft (6) is provided with a set screw groove (8);
the electric motor (1) and an electric motor sleeve (9) are positioned through a jump ring, ,
the electric motor lock plug (2) further comprises an electric motor sleeve (9) and a cover plate sleeve frame (10), wherein at least one limitation bulge (11) is arranged outside the electric motor sleeve (9), a hole groove corresponding to an electric motor housing in shape is arranged inside the electric motor sleeve (9), an insertion hole adapting to the periphery of the electric motor sleeve (9) is arranged on the cover plate sleeve frame (10), and a limitation groove (12) corresponding to the limitation bulge (11) is arranged on the cover plate sleeve frame (10),
an electric motor conductive contact sleeve (5) insulated from the electric motor (1) is arranged on a surface of an electric motor reducer, wherein the electric motor conductive contact sleeve (5) comprises an inner layer insulation sleeve (13) and an outer layer conductive layer (14), wherein the inner layer insulation sleeve (13) covers the surface of the electric motor reducer, the outer layer conductive layer (14) is sleeved on the inner layer insulation sleeve (13), the outer layer conductive layer (14) is electrically connected to one power supply connection point of the electric motor (1), the other power supply connection point of the electric motor (1) is electrically connected to the electric motor housing, and a power supply elastic sheet (15) is arranged at one side, close to the outer layer conductive layer (14), of a bottom of the lock plug body, the power supply elastic sheet (15) being in elastic contact with outer layer conductive layer (14), and
the electric motor housing is electrically connected to the electric motor output shaft (6) through an internally connected mechanical gear, the electric motor output shaft (6) and the lock plug core (3) are electrically interconnected as well, the lock plug core (3) and lock plug case (4) are further electrically interconnected, such that the power supply connection point connected to the electric motor housing is caused to be electrically interconnected through the mechanical gear, the electric motor output shaft (6), the lock plug core (3) and the lock plug case (4).

2. The lock plug (2) with the electric motor (1) according to claim 1, **characterized in that** the electric motor lock plug (2) further comprises an electric motor fixation part (17), wherein one end of the electric motor fixation part (17) is provided with an electric motor insertion hole groove which is consistent with the electric motor (1) in shape, and the other end is provided with two mounting holes (18) which are fixedly connected to a bottom of the lock plug case (4); the bottom of the lock plug case (4) is provided with a screw fixation hole which is consistent with the mounting hole (18) of the electric motor fixation part (17); and an overall dimension of the electric motor (1) and the electric motor fixation part (17) is smaller than that of the lock plug hole groove of the door.

3. The lock plug (2) with the electric motor (1) according to claim 1, **characterized in that** a spring is arranged between the interior of the electric motor sleeve (9) and the electric motor (1).

## Patentansprüche

1. - Steckschloss (2) mit einem Elektromotor (1), wobei das Steckschloss (2) einen Steckschlosskörper und den Elektromotor (1) umfasst, wobei der Elektromotor (1) an einem Ende des Steckschlosskörpers montiert ist, der Steckschlosskörper einen Steckschlosskern (3) und einen Steckschlosskasten (4) umfasst, der Elektromotor (1) fest mit dem Steckschlosskern (3) verbunden ist und eine Gesamtabmessung des Elektromotors (1) kleiner als die einer Steckschlossöffnungsrille einer Tür ist,
**dadurch gekennzeichnet, dass**
die Mitte des Steckschlosskerns (3), die einer Elektromotorausgangswelle (6) entspricht, mit einer halbrunden Öffnungsrille mit der gleichen Form und Größe wie die Elektromotorausgangswelle (6) versehen ist, der Steckschlosskern (3) mit einer Stellschraubenöffnung (7) versehen ist und eine Position der Elektromotorausgangswelle (6), die der Stellschraubenöffnung (7) entspricht, mit einer Stellschraubenrille (8) versehen ist,
der Elektromotor (1) und eine Elektromotorhülse (9) durch einen Biegering hindurch positioniert sind,
das Elektromotorsteckschloss (2) ferner eine Elektromotorhülse (9) und einen Deckplattenhülsenrahmen (10) umfasst, wobei mindestens eine Begrenzungsausbauchung (11) außerhalb der Elektromotorhülse (9) angeordnet ist, eine Öffnungsrille, die der Form eines Elektromotorgehäuses entspricht, in der Elektromotorhülse (9) angeordnet ist, eine Einsetzöffnung, die sich an den Außenumfang der Elektromotorhülse (9) anpasst, an dem Deckplattenhülsenrahmen (10) angeordnet ist und eine Begrenzungsrille (12), die der Begrenzungsausbauchung (11) entspricht, an dem Deckplattenhülsenrahmen (10) angeordnet ist,
eine leitende Kontakthülse (5) des Elektromotors, die von dem Elektromotor (1) isoliert ist, auf einer Oberfläche einer Elektromotoruntersetzung angeordnet ist, wobei die leitende Kontakthülse (5) des Elektromotors eine Innenschichtisolationshülse (13) und eine leitende Schicht (14) als Außenschicht umfasst, wobei die Innenschichtisolationshülse (13) die Oberfläche der Elektromotoruntersetzung bedeckt, die leitende Schicht (14) als Außenschicht auf die Innenschichtisolationshülse (13) gehülst ist, die leitende Schicht (14) als Außenschicht elektrisch mit einem Energieversorgungsverbindungspunkt des Elektromotors (1) verbunden ist, der andere Energieversorgungsverbindungspunkt des Elektromotors (1) elektrisch mit dem Elektromotorgehäuse verbunden ist und eine elastische Energieversorgungsbahn (15) an einer Seite einer Unterseite des Steckschlosskörpers nahe der leitenden Schicht (14) als Außenschicht angeordnet ist, wobei die elastische Energieversorgungsbahn (15) in elastischem Kontakt mit der leitenden Schicht (14) als Außenschicht steht, und
das Elektromotorgehäuse elektrisch mit der Elektromotorausgangswelle (6) durch ein innerlich verbundenes mechanisches Getriebe verbunden ist, die Elektromotorausgangswelle (6) und der Steckschlosskern (3) ebenfalls elektrisch miteinander verbunden sind, der Steckschlosskern (3) und der Steckschlosskern (4) ferner elektrisch miteinander verbunden sind, so dass bewirkt wird, dass der Energieversorgungsverbindungspunkt, der mit dem Elektromotorgehäuse verbunden ist, über das mechanische Getriebe, die Elektromotorausgangswelle (6), den Steckschlosskern (3) und den Steckschlosskasten (4) elektrisch verbunden ist.

2. - Steckschloss (2) mit dem Elektromotor (1) nach Anspruch 1, **dadurch gekennzeichnet, dass** das Elektromotorsteckschloss (2) ferner einen Elektromotorbefestigungsteil (17) umfasst, wobei ein Ende des Elektromotorbefestigungsteils (17) mit einer Elektromotoreinsetzöffnungsrille versehen ist, deren Form mit der des Elektromotors (1) übereinstimmt, und das andere Ende mit zwei Montageöffnungen (18) versehen ist, die fest mit einer Unterseite des Steckschlosskastens (4) verbunden sind, die Unterseite des Steckschlosskastens (4) mit einer Schraubenbefestigungsöffnung versehen ist, die mit der Montageöffnung (18) des Elektromotorbefestigungsteils (17) übereinstimmt, und eine Gesamtabmessung des Elektromotors (1) und des Elektromotorbefestigungsteils (17) kleiner als die Steckschlossöffnungsrille der Tür ist.

3. - Steckschloss (2) mit dem Elektromotor (1) nach Anspruch 1, **dadurch gekennzeichnet, dass** zwischen dem Inneren der Elektromotorhülse (9) und dem Elektromotor (1) eine Feder angeordnet ist.

## Revendications

1. - Barillet de serrure (2) avec un moteur électrique (1), le barillet de serrure (2) comprenant un corps de barillet de serrure et le moteur électrique (1), le moteur électrique (1) étant monté à une extrémité du corps de barillet de serrure, le corps de barillet de serrure comprenant un noyau de barillet de serrure (3) et un boîtier de barillet de serrure (4), le moteur électrique (1) étant relié de manière fixe au noyau de barillet de serrure (3), et une dimension globale du moteur électrique (1) étant plus petite que celle d'une rainure de trou de barillet de serrure d'une porte,
**caractérisé par le fait que** :
le centre, correspondant à un arbre de sortie de moteur électrique (6), du noyau de barillet de serrure (3) comporte une rainure de trou semi-circulaire ayant la même forme et la même taille que celles de l'arbre de sortie de moteur électrique (6), le noyau de barillet de serrure (3) comportant un trou de vis de calage (7), et une position, correspondant au trou de vis de calage (7), de l'arbre de sortie de moteur électrique (6) comportant une rainure de vis de calage (8) ;
le moteur électrique (1) et un manchon de moteur électrique (9) sont positionnés à travers un anneau à ressort ;
le barillet de serrure à moteur électrique (2) comprend en outre un manchon de moteur électrique (9) et un cadre de manchon de plaque de recouvrement (10), au moins un renflement de limitation (11) étant disposé à l'extérieur du manchon de moteur électrique (9), une rainure de trou correspondant à la forme d'un boîtier de moteur électrique étant disposée à l'intérieur du manchon de moteur électrique (9), un trou d'introduction s'adaptant à la périphérie du manchon du moteur électrique (9) étant disposé sur le cadre de manchon de plaque de recouvrement (10), et une rainure de limitation (12) correspondant au renflement de limitation (11) étant disposée sur le cadre de manchon de plaque de recouvrement (10),
un manchon de contact conducteur de moteur électrique (5) isolé du moteur électrique (1) est disposé sur une surface d'un réducteur de moteur électrique, le manchon de contact conducteur de moteur électrique (5) comprenant un manchon d'isolation de couche interne (13) et une couche conductrice de couche externe (14), le manchon d'isolation de couche interne (13) recouvrant la surface du réducteur de moteur électrique, la couche conductrice de couche externe (14) étant emmanchée sur le manchon d'isolation de couche interne (13), la couche conductrice de couche externe (14) étant reliée électriquement à un point de raccordement d'alimentation du moteur électrique (1), l'autre point de raccordement d'alimentation du moteur électrique (1) étant relié électriquement au boîtier de moteur électrique, et une feuille élastique d'alimentation (15) étant disposée sur un côté, près de la couche conductrice de couche externe (14), d'un fond du corps de barillet de serrure, la feuille élastique d'alimentation (15) étant en contact élastique avec la couche conductrice de couche externe (14), et
le boîtier de moteur électrique est relié électriquement à l'arbre de sortie de moteur électrique (6) par l'intermédiaire d'un engrenage mécanique relié intérieurement, l'arbre de sortie de moteur électrique (6) et le noyau de barillet de serrure (3étant sont également reliés électriquement entre eux, le noyau de barillet de serrure (3) et le boîtier de barillet de serrure (4) étant en outre reliés électriquement entre eux, de telle sorte que le point de raccordement d'alimentation relié au boîtier de moteur électrique est amené à être interconnecté électriquement par l'intermédiaire de l'engrenage mécanique, de l'arbre de sortie de moteur électrique (6), du noyau de barillet de serrure (3) et du boîtier de barillet de serrure (4).

2. - Barillet de serrure (2) avec un moteur électrique (1) selon la revendication 1, **caractérisé par le fait que** le barillet de serrure à moteur électrique (2) comprend en outre une pièce de fixation de moteur électrique (17), une extrémité de la pièce de fixation de moteur électrique (17) comportant une rainure de trou d'introduction de moteur électrique dont la forme correspond à celle du moteur électrique (1), et l'autre extrémité comportant deux trous de montage (18) qui sont reliés de manière fixe à un fond du boîtier de barillet de serrure (4) ; le fond du boîtier de barillet de serrure (4) comportant un trou de fixation de vis qui correspond au trou de montage (18) de la pièce de fixation de moteur électrique (17) ; et une dimension globale du moteur électrique (1) et de la pièce de fixation de moteur électrique (17) étant plus petite que celle de la rainure de trou de barillet de serrure de la porte.

3. - Barillet de serrure (2) avec un moteur électrique (1) selon la revendication 1, **caractérisé par le fait qu'**un ressort est disposé entre l'intérieur du manchon de moteur électrique (9) et le moteur électrique (1).
